# EUROPEAN PATENT SPECIFICATION

(11) **EP 3 792 578 B1**
(45) Date of publication and mention of the grant of the patent: **09.08.2023**
(21) Application number: 19197266.0
(22) Date of filing: 13.09.2019
(51) Int. Cl.: F28D 9/00, C02F 1/46, F28F 3/00, F28D 21/00

(54) **HEAT EXCHANGER PLATE AND PLATE HEAT EXCHANGER FOR TREATMENT OF A LIQUID FEED**
WÄRMETAUSCHERPLATTE UND PLATTENWÄRMETAUSCHER ZUR BEHANDLUNG EINER FLÜSSIGKEITSZUFUHR
PLAQUE D'ÉCHANGEUR DE CHALEUR ET ÉCHANGEUR DE CHALEUR À PLAQUES POUR LE TRAITEMENT D'UNE ALIMENTATION LIQUIDE

(43) Date of publication of application: 17.03.2021
(73) Proprietor: Alfa Laval Corporate AB, 221 00 Lund (SE)
(72) Inventor: SLOTH, Jonas, DK-2300 COPENHAGEN S (DK)
(74) Representative: Alfa Laval Attorneys

(56) References cited:
- WO-A1-2006/104443
- CN-A- 101 151 500
- DE-A1- 3 721 132
- KR-B1- 101 146 105
- US-A- 4 572 766
- US-A- 5 587 053
- US-A1- 2017 299 287

## Description

The present invention relates to a plate heat exchanger for treatment of a liquid feed, a heat exchanging plate for a plate heat exchanger for treatment of a liquid feed, a gasket for a plate heat exchanger for treatment of a liquid feed and a method of producing a plate heat exchanger for treatment of a liquid feed.

### Background of the invention

Equipment for desalination of seawater, where one or several plate packages of heat exchanger plates form the main components in the process, has been manufactured since many years. SE 464 938 B discloses such a desalination plant comprising a plate package provided in a cylindrical container. The heat exchanger plates have no ports for steam, but instead the space outside the heat exchanger plates is used as one or several flow paths for the steam, depending on the kind of process. The container is a substantially cylindrical pressure vessel. In a large plant including several plate packages, these may be placed in the longitudinal direction of the cylinder. To a certain extent, the container is limiting for the size of the plant, if not several containers can be included in the plant.

The applicant company has since several years produced a fresh water generator without any tank where the evaporation, separation and condensation take place in the plate package. The details may be found in the international application WO 2006 / 104443 A1 assigned to the Alfa Laval Corporate AB. It is disclosing a plate heat exchanger for desalination. The heat exchanger has first- and second plate interspaces formed in alternating order in the heat exchanger. The first plate interspace forms an evaporation section, a separation section and a condensation section, whereas the second plate interspace form heating and cooling sections. The evaporation section is used for evaporating a liquid feed, such as sea water, the separation section is used for separating evaporated feed from non-evaporated feed and the condensation section is used for condensing the evaporated feed. The heating section is heating the evaporation section and the cooling section is cooling the condensation section. The separation section extends between both plate interspaces, i.e. also between the heating and cooling sections in the second plate interspace. The advantage of the above-mentioned heat exchanger is that it does not need any container since the whole treatment of the seawater is performed in the plate package.

The above plate heat exchanger has centrally located ports for heating fluid, cooling fluid and fresh water and the ports for steam and feed are symmetrically arranged about a central axis of the heat exchanger plate. In this way only one plate type is needed. The first and second plate interspaces are formed by using two different gaskets and arranging the heat exchange plates face to face. In this way the corrugations in the opposing plates will form a cross shaped pattern.

The centrally located ports and the ports adjacent the edges of the heat exchanger plate implies that up to six gasket elements will be required along the width of the heat exchanger plate. The gaskets occupy space on the heat exchanger plate which cannot be used for the process. The width of the gasket will be about the same for a large heat exchanges as for a small heat exchanger. For a large heat exchanger, the space occupied by the gaskets may be negligible, however, for a small heat exchanger it may be significant.

There is an increased need for smaller fresh water generators which may be used on board smaller vessels. When reducing the size of the fresh water generator as discussed above, the gaskets will still take up essentially the same amount of space. This will make the smaller fresh water generators less area efficient compared to the large fresh water generators. This is especially problematic for the condenser which needs a large heat exchanging area to operate properly.

One solution to the above problem is to omit the centrally located ports, in particular in the condenser, and have all of the ports arranged at the edges of the heat exchanging plate. One example of such design for the condenser is presented in the pending European patent application EP19171723.0. The ports may then still be symmetrical placed about the centre axis to allow the individual plates to be flipped over, i.e. turned 180 degrees about the centre axis, while keeping the ports at the same relative position. By keeping the ports and the gasket grooves symmetric about the centre axis, only one plate type is needed.

Having centrally located ports for the cooling fluid allows the passages for evaporated feed to be placed adjacent both edges of the plate, however, arranging the ports at the edges only implies that only one passage for evaporated feed from the separator to the condenser may be located adjacent one edge of the plate only as the opposite side of the plate is used for the ports for the cooling fluid and the condensate of the condenser. The flow of evaporated feed will thus be asymmetric in the separation section. Experiments and simulations have shown that the distribution of the flow in the separator is thereby negatively influenced as a greater part of the flow will take the shortest path between the evaporation section and the condenser. This may in turn lead to carry over of non-vaporised fluid, i.e. liquid droplets, from the vaporizer to the condenser.

It is therefore an object of the present invention to provide technologies for treatment of a liquid feed which avoids the above-mentioned problem.

US 8,646,517 describes a heat exchanger plate having a gasket with a displaced gasket close to the port hole.

CN 203820488 describes a desalination plate showing a field gasket with inner projections.

### Summary of the invention

The above objects are realised in a plate for a heat exchanger according to claim 1, an associated gasket according to claim 12 and a method of producing a plate heat exchanger according to claim 13. A first aspect describes a plate heat exchanger for treatment of a liquid feed, the heat exchanger comprising a plate package having a plurality of successively arranged heat exchanger plates, each heat exchanger plate defining a first longitudinal edge, an opposite second longitudinal edge extending parallel to the first longitudinal edge and a centre axis extending substantially centrally between and in parallel with the first longitudinal edge and the second longitudinal edge, the centre axis dividing the plate into a first part extending between the first longitudinal edge and the centre axis, and a second part extending between the second longitudinal edge and the centre axis, the plate package defining first plate interspaces and second plate interspaces arranged in alternating order, each plate interspace being enclosed by a gasket extending along the first and second longitudinal edges of each plate, each heat exchanger plate further defining:
an evaporation section for vaporizing the feed, a condensation section for condensing the feed, and a separation section for separating vaporized feed and non-vaporized feed, the separation section being located between the evaporation section and the condensation section in the longitudinal direction,
a first passage located between the evaporation section and the separation section in the first and second part of the plate for allowing the vaporized feed to flow from the evaporation section to the separation section,
a second passage located between the separation section and the condensation section in the first part of the plate for allowing the vaporized feed to flow from the separation section to the condensation section,
a gasket element preventing access between the separation section and the condensing section in the second part of the plate, and
a flow guiding element located between the separation section and the second passage and extending from the first edge towards the centre axis for reducing the flow area between the separation section and the second passage.

The evaporation section is located in the lower part of the plate package, the condensation section is located in the upper part of the plate package and the separation section is located in between the evaporation section and the condensation section. The first passage between the evaporation section and the separation section allows evaporated feed to flow upwards from the complete width of the evaporation section. The first passage thus extends a larger part of the distance between the longitudinal edges, i.e. on both parts of the plate divided by the centre axis. Beside the first passage, passages for non-evaporated feed are provided.

The second passage between the separation section and the condensation section extend on the first part of the plate only, i.e. adjacent the first one of the longitudinal edges only. Fluid access between the separation section and the condensing section in the second part of the plate is prevented by the gasket element. This is in order to have the ports located adjacent the edges and avoid any centrally located ports as described above. The non-evaporated feed thus enters the second passage stretching between the separation section and the condensation section at the first longitudinal edge and condensates at the heat transfer area located at the centre axis. The condensate is collected at a condensate port at the opposite second longitudinal edge of the plate. The heat transfer area of the condensation section is sealed off from the separation section except at the location of the second passage.

The flow guiding element extends from the first longitudinal edge at least a part of the distance towards the centre axis for reducing the flow area between the separation section and the second passage, thereby causing the flow of vaporized feed to flow more towards the second edge and prevent the flow from taking the shortest path between the first passage and the second passage. This leads to a more even distribution of the flow in the separation section and avoids carry over of non-evaporated feed to the condensation section. The separation section is closed by means of the gasket except on the location of the first and second passages and the outlet passage for non-evaporated feed.

According to a further embodiment of the first aspect, the flow area between the separation section and the second passage is reduced by 10%-30% compared to the flow area of the second passage.

The above value improves the distribution of the flow in the separation section while still causing an acceptable pressure to increase due to the reduced flow area.

According to a further embodiment of the first aspect, the flow guiding element forms part of the gasket along the first edge.

In a preferred embodiment, the flow guiding element is part of the gasket. Apart from establishing a simple and secure flow guiding element, this solution has the added advantage of helping in the alignment and fixation of the gasket to the plate. Alternatively, the flow guiding element may be pressed in the plate.

According to a further embodiment of the first aspect, the flow guiding element has a triangular shape.

In this way the flow of vaporized feed approaching the second passage from directly below the flow guiding element may be guided in a direction towards the centre axis and prevent the flow from taking the shortest route and improve the distribution of the flow in the separation section.

According to a further embodiment of the first aspect, the flow guiding element has a rounded shape towards the separation section.

In this way the flow of vaporized feed approaching the second passage from directly below the flow guiding element may even be caused to flow in the transversal direction towards the second edge before entering the second passage. This will further extend the flow distance between the first- and second passages and improve the distribution of the flow in the separation section as the flow is caused to flow towards the second edge.

According to a further embodiment of the first aspect, every second plate interspace defines a cooling section for cooling the condensation section and/or heating section for heating the evaporation section.

The heating section is located in the opposite side of the plate relative to the evaporation section and the cooling section is located in the opposite side of the plate relative to the condensation section. The heating section is heating the evaporation section and the cooling section is cooling the condensation section.

According to a further embodiment of the first aspect, a further flow guiding element is present at the second edge extending towards the centre axis.

The further flow guiding element, which preferably is forming part of the gasket at the second edge, allows for symmetry relative to the flow guiding element of the first edge.

According to a further embodiment of the first aspect, the liquid feed is sea water.

The plate heat exchanger may be a fresh water generator using sea water as feed and producing fresh water.

According to a further embodiment of the first aspect, the separation section and the flow guiding element is provided in both the first and second plate interspaces.

The separation section is then provided both between the evaporation section and the condensation section, and, between the heating section and cooling section. Apertures are provided in the plate for allowing evaporated feed to flow between the plates.

According to a further embodiment of the first aspect, the heat exchanging plate is provided with apertures at the first and second passages for communication between the plate interspaces.

The aperture(s) at the first passage allow evaporated feed to enter the plate interspace opposite to the evaporation section and the aperture(s) at the second passage allow the evaporated feed to return to the plate interspace housing the condensation section.

According to a further embodiment of the first aspect, the heat exchanging plate is provided with ports for cooling medium and condensate and being arranged symmetrically about the centre axis with respect to the ports at the second passage.

As mentioned above, typically, the inlet and outlet ports for the cooling medium flowing on the opposite side of the condensing section and the outlet port for the condensate correspond to vapor apertures at the opposite edge of the plate at the second passage.

According to a further embodiment of the first aspect, each heat exchanger plate is corrugated in the separation section forming ridges and valleys, whereby a ridge corresponds to a valley on the opposite side of the plate and whereby in each plate interspace ridges fall into valleys and vice versa.

Whereas the heat exchange area in the condensing section and evaporation section typically has a cross-corrugated pattern where opposing ridges of opposing plates contact at contact points, the separation section may be configured such that the opposing plates do not contact and typically with transversally oriented valleys and ridges which fall into each other, establishing a meandering flow path capable of catching of non-evaporated feed.

The above objects are realised in a second aspect by a heat exchanging plate for a plate heat exchanger for treatment of a liquid feed, the heat exchanger comprising a plate package having a plurality of successively arranged heat exchanger plates with gaskets in-between, the heat exchanger plate defining:
a first longitudinal edge, an opposite second longitudinal edge extending parallel to the first longitudinal edge and a centre axis extending substantially centrally between the first longitudinal edge and the second longitudinal edge, the centre axis dividing the plate into a first part extending between and in parallel with the first longitudinal edge and the centre axis, and a second part extending between the second longitudinal edge and the centre axis,
an evaporation section for vaporizing the feed, a condensation section for condensing the feed, and a separation section for separating vaporized feed and non-vaporized feed, the separation section being located between the evaporation section and the condensation section in the longitudinal direction,
a first passage located between the evaporation section and the separation section in the first and second part of the plate for allowing the vaporized feed to flow from the evaporation section to the separation section,
a second passage located between the separation section and the condensation section in the first part of the plate for allowing the vaporized feed to flow from the separation section to the condensation section,
an element for preventing access between the separation section and the condensing section in the second part of the plate, and
a flow guiding element located between the separation section and the second passage and extending from the first edge towards the centre axis for reducing the flow area between the separation section and the second passage.

The above heat exchanging plate according to the second aspect is preferably used in the plate heat exchanger according to the first aspect.

The above objects are realised in a third aspect by a gasket for a plate heat exchanger for treatment of a liquid feed, the heat exchanger comprising a plate package having a plurality of successively arranged heat exchanger plates with gaskets in-between, the gasket defining:
a first longitudinal edge, an opposite second longitudinal edge extending parallel to the first longitudinal edge and a centre axis extending substantially centrally between and in parallel with the first longitudinal edge and the second longitudinal edge, the centre axis dividing the gasket into a first part extending between the first longitudinal edge and the centre axis, and a second part extending between the second longitudinal edge and the centre axis,
an evaporation section for vaporizing the feed, a condensation section for condensing the feed, and a separation section for separating vaporized feed and non-vaporized feed, the separation section being located between the evaporation section and the condensation section in the longitudinal direction,
a first passage located between the evaporation section and the separation section in the first and second part of the gasket for allowing the vaporized feed to flow from the evaporation section to the separation section,
a second passage located between the separation section and the condensation section in the first part of the gasket for allowing the vaporized feed to flow from the separation section to the condensation section
a gasket element preventing access between the separation section and the condensing section in the second part of the gasket, and
a flow guiding element located between the separation section and the second passage and extending from the first edge towards the centre axis for reducing the flow area between the separation section and the second passage.

The above gasket according to the third aspect is preferably used together with the plate according to the second aspect in the plate heat exchanger according to the first aspect.

The above objects are realised in a fourth aspect by method of producing a plate heat exchanger for treatment of a liquid feed such as sea water by providing a plurality of heat exchanging plates, each heat exchanger plate defining:
a first longitudinal edge, an opposite second longitudinal edge extending parallel to the first longitudinal edge and a centre axis extending substantially centrally between and in parallel with the first longitudinal edge and the second longitudinal edge, the centre axis dividing the plate into a first part extending between the first longitudinal edge and the centre axis, and a second part extending between the second longitudinal edge and the centre axis,
a evaporation section for vaporizing the feed, a condensation section for condensing the feed, and a separation section for separating vaporized feed and non-vaporized feed, the separation section being located between the evaporation section and the condensation section in the longitudinal direction,
a first passage located between the evaporation section and the separation section in the first and second part of the plate for allowing the vaporized feed to flow from the evaporation section to the separation section,
a second passage located between the separation section and the condensation section in the first part of the plate for allowing the vaporized feed to flow from the separation section to the condensation section, and
a flow guiding element located between the separation section and the second passage and extending from the first edge towards the centre axis for reducing the flow area between the separation section and the second passage,
the method comprising the steps of:
arranging the heat exchanging plates successively in a plate package having a gasket in-between each of the plates such that the plate package defining first plate interspaces and second plate interspaces arranged in alternating order, whereby a gasket element preventing access between the separation section and the condensing section in the second part of the plate and each plate interspace being enclosed by the gasket extending along the first and second edges of each plate.

The above method according to the third aspect is preferably used to manufacture the plate heat exchanger according to the first aspect using the plate according to the second aspect and the gasket according to the third aspect.

### Brief description of the drawings

Fig. 1 discloses a side view of a plate heat exchanger according to the present invention.
Fig. 2 discloses a view of the front side of a heat exchanger plate and gasket.
Fig. 3 discloses a view of the rear side of a heat exchanger plate and gasket.

### Detailed description of the drawings

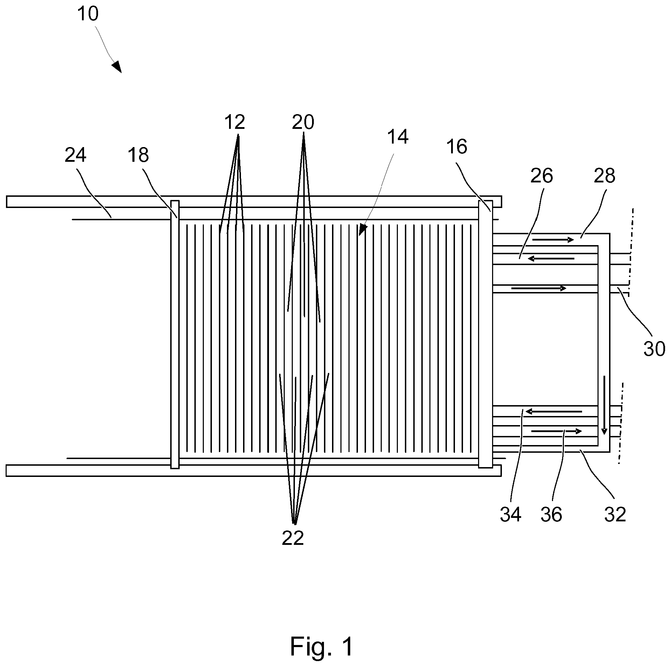

Fig. 1 discloses a side view of a plate heat exchanger 10 of the invention. In the following description an application with respect to desalination of seawater is described, i.e. the feed is sea water. However, it is to be noted that the invention is not limited to the feed being sea water but may also refer to any other treatment, for instance distillation of a liquid. The plate heat exchanger comprises a large number of compression moulded heat exchanger plates 12, which are provided in parallel to each other and successively in such a way that they form a plate package 14. The plate package 14 is provided between a frame plate 16 and a pressure plate 18.

Between the heat exchanger plates 12, first plate interspaces 20 and second plate interspaces 22 are formed. The first plate interspaces 20 and the second plate interspaces 22 are provided in an alternating order in the plate package 14 in such a way that substantially each first plate interspace 20 is surrounded by two second plate interspaces 22, and substantially each second plate interspace 22 is surrounded by two first plate interspaces 20. Different sections in the plate package 14 are delimited from each other by means of gaskets (not shown) in each plate interspace whereby the first plate interspace 20 includes a first type gasket (not shown) and the second plate interspace 22 includes a second type gasket (not shown). The plate package 14, i.e. the heat exchanger plates 12 and the gaskets (not shown) provided therebetween, is kept together by means of schematically indicated tightening bolts 24 in a manner known per se.

The plate package 14 is connected to a cooling water inlet conduit 26, a cooling water outlet conduit 28 and a fresh water outlet conduit 30. The cooling water is typically sea water and thus the cooling water outlet conduit 28 is connected to a sea water inlet conduit 32 in order to recover the heat absorbed by the cooling water. The plate package 12 is further connected to a heating fluid inlet conduit 34 and a heating fluid outlet conduit 36. The heating fluid is used for vaporizing the feed, i.e. the sea water which is entering the plate package 14 through the sea water inlet conduit 32. The heating fluid may be heated water, such as jacket water from a ship's engine. The condensed fresh water is leaving the plate package 14 through the fresh water outlet conduit 30.

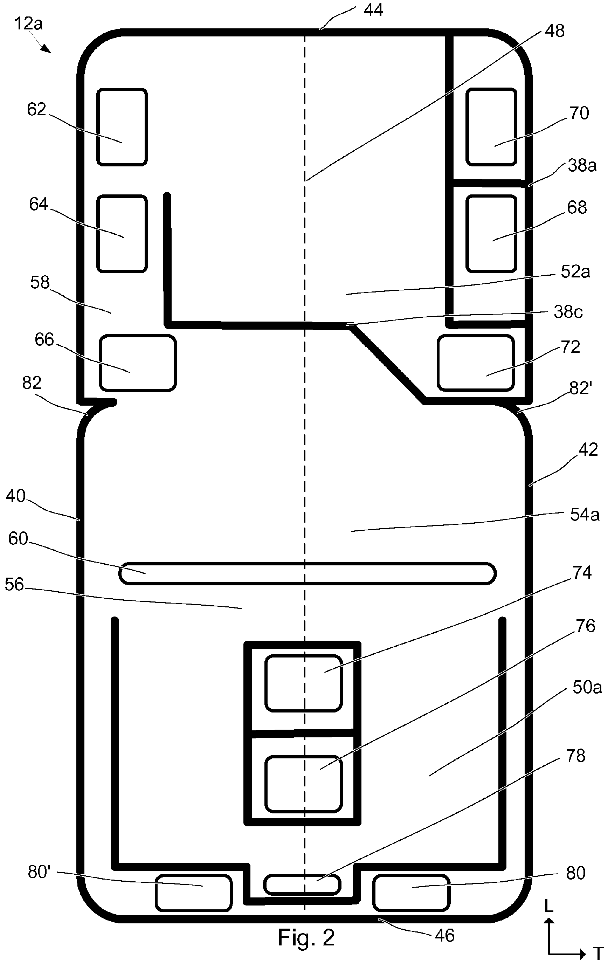

Fig. 2 discloses a view of the front side of a heat exchanger plate, designated 12a and a first type gasket 38 of a plate heat exchanger according the present invention.

Each heat exchanger plate 12a has a first longitudinal edge 40, an opposite second longitudinal edge 42 substantially parallel with the first longitudinal edge 40, an upper edge 44 and a lower edge 46 located opposite the upper edge 44. The heat exchanger plate 12a further defines a centre axis 48 extending in the longitudinal direction substantially centrally between the longitudinal edges 40, 42. The centre axis 48 extending substantially vertically when the plate package is located in a normal position of use.

The heat exchanger plate comprises an evaporation section 50a adjacent the lower edge 46 for evaporating the feed, i.e. the sea water, a condensation section 52a adjacent the upper edge 44 for condensing the evaporated feed and a separation section 54a located in between the evaporation section 50a and the condensing section 52a for separating evaporated feed and non-evaporated feed. The evaporation section 50a is connected to the separation section 54a via a first passage 56 and the separation section 54a is connected to the condensation section 52a via a second passage 58 for allowing vaporized feed to flow from the evaporation section 50a via the separation section 54a to the condensation section 52a. The second passage 58 only extends adjacent the first edge 40, and a gasket element 38c is provided presenting fluid access between the separation section 54a and the condensation section 52a outside the second passage 58, i.e. adjacent the second edge 42.

The evaporation section 50a and the condensation section 52a are corrugated defining valleys and ridges having oblique angles forming a cross corrugated pattern together with the opposing plate in order to increase the heat transfer through the heat exchanger plate 12a. The first plate interspace is formed by arranging two plates 12a face-to-face having the first type gasket 38 located in-between the heat exchanger plates 12a. The two plates 12a forming the plate interspace are identical, however, one of the heat exchanger plates 12a is rotated 180 degrees about the centre axis 46. In this way the corrugation of the heat exchanger plates 12a may be arranged such that opposing ridges form a cross shaped pattern and contact each other at contact points.

The separation section 54a receives evaporated feed from the evaporation section 50a via the first passage 56 and separates the evaporated feed from non-evaporated feed. This is made by parallel transversally oriented ridges and valleys which fall into each other forming a meandering flow path. The evaporated feed continues up to the condensation section 52a via the second passage 58.

The heat exchanger plate 12a defines one elongated lower vapor port 60 located in the first passage 56 allowing some vaporized feed from the evaporation section 50a to pass to the opposite plate interspace which includes a parallel separation section. Further, three upper vapor ports 62 64 66 are located in the second passage 58 adjacent the first longitudinal edge 40 for allowing vaporized feed to pass through the heat exchanger plate 12a to the condensation section 52a.

Located adjacent the second edge 42 are a cooling water outlet port 68, a cooling water inlet port 70 and a fresh water outlet port 72. The cooling water inlet port 70 is communicating with the cooling water inlet conduit, the cooling water outlet port 72 is communicating with the cooling water outlet conduit and the fresh water outlet port 58, which collects the condensed feed from the condensation section 52a, is communicating with the fresh water outlet conduit. The ports 62 64 66 and 68 70 72 are arranged symmetrically about the centre axis 48.

Centrally located adjacent the evaporation section 50a a heating fluid inlet port 74 and a heating fluid outlet port 76 is provided. The heating fluid inlet port 74 is communicating with the heating fluid inlet conduit and the heating fluid outlet port 76 is communicating with the cooling water outlet conduit. Additionally, a feed inlet port 78 connected to the sea water inlet conduit for supplying sea water to the evaporation section 50a is centrally located adjacent the lower edge 46 and two outlet ports 80 80' for collecting the non-evaporated feed flowing down from the separation section 54a are located on opposite sides of but separated from feed inlet port 78 adjacent the lower edge 46.

The first type gasket 38 surrounds the heat exchanger plate 12a and defines the evaporation section 50a, the separation section 54a and the condensation section 52a. The cooling water inlet port 68, the cooling water outlet port 70, the heating fluid inlet port 74 and the heating fluid outlet port 76 are sealed off from each other and from the evaporation section 50a, the separation section 54a and the condensation section 52a by the gasket 38 in the present plate interspace.

The upper vapor ports 62 64 66 correspond in size and shape to the cooling water inlet port 68, the cooling water outlet port 70 and the fresh water (condensate) outlet port 72, respectively, and they are arranged symmetrically about the centre axis 18. In this way, the heat exchanger plate may be rotated about the centre axis 18 without changing the configuration of the six ports 62 64 66 68 70 72. In this way centrally located ports may be omitted from the condensation section 52a which may be made larger compared to having centrally located ports. The fresh water (condensate) outlet port 72 is separated from the separation section 54a by the gasket element 38c.

Between the separation section 54a and the second passage 58 a flow guiding element 82 is provided. The flow guiding element is formed by the gasket 38 at the first edge 40 and extends towards the centre axis 48. The flow guiding element 82 forms an obstacle for the vapor flow from the separation section 54a into the second passage 58 and directs the vapor flow from the first passage into the separation section towards the second edge 42. The flow area is reduced at the flow guiding element 82 compared to the second passage 58. This forces the vapor flow to take a longer route towards the second edge 42 and prevents the flow from taking the direct route from the first passage 56 to the second passage 58. The flow guiding element 82 thus reduces the risk of carryover of non-evaporated feed into the second passage 58 by allowing an even distribution of the flow over the separation section 54a. The flow guiding element 82 may alternatively be made as a part of the plate itself, however, preferably the gasket is used as the flow guiding element 82 also will help fixate the gasket to the edge. A corresponding flow guiding element 82' may be provided at the second edge 42.

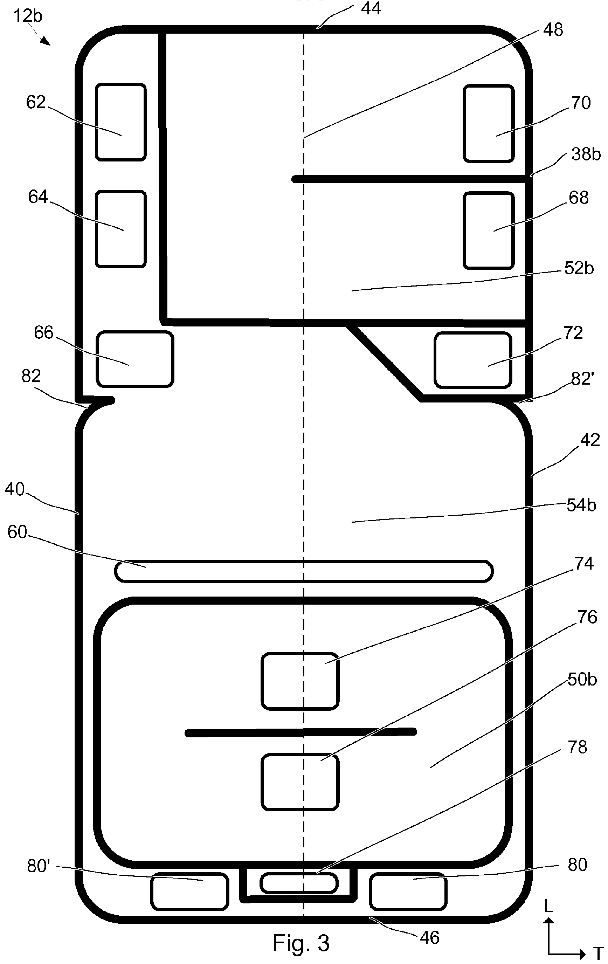

Fig. 3 discloses view of the rear side of a heat exchanger plate 12b and a second type gasket 38b of a plate heat exchanger according to the present invention. The heat exchanger plate 12b is thus the same as the heat exchanger plate 12a except that it has been rotated 180 degrees about the centre axis 46. The gasket 38b is arranged to define a heating section 52a opposite the evaporation section and a cooling section 52b opposite the condensation section. The cooling water inlet port 68 and the cooling water outlet port 70 communicate with the cooling section 52b whereas the heating fluid inlet port 74 and the heating fluid outlet port 76 communicate with the heating section 50b. The cooling section 52b the heating section 50b are sealed off relative to the other ports, respectively. The cooling section 52b is arranged to cool the opposite condensing section and the heating section 50b is arranged to heat the opposite evaporation section. In both the cooling section 52b the heating section 50b the flow is guided along a flow path making a 18 degree turn for covering the complete heat transfer surface. The rear side forms a second plate interspace.

The rear side of a heat exchanger plate 12b also includes a separation section 54b between the heating section 50b and the cooling section 52b. Vaporized feed is introduced via the lower vapor aperture 60 from the first passage of the first plate interspace. The separation section 54b functions identically to the one on the opposite side and separates evaporated feed and non-evaporated feed. The evaporated feed flows up through the upper vapor apertures 62 64 66 to the second passage whereas the non-evaporated feed flows down to the outlets 80 80'.

The separation section 54b also includes a flow guiding element 82 for the same purposes as on the opposite side. The flow guiding element 82 forms an obstacle for the vapor flow from the separation section 54b into the second passage 58 and directs the vapor flow from the first passage into the separation section towards the second edge 42. The flow area is reduced at the flow guiding element 82 compared to the second passage 58. This forces the vapor flow to take a longer route towards the second edge 42 and prevents the flow from taking the direct route from the lower vapor aperture 60 to the upper vapor apertures 62 64 66. The flow guiding element 82 thus reduces the risk of carryover of non-evaporated feed into the upper vapor apertures by allowing an even distribution of the flow over the separation section 54b. The flow guiding element 82 may alternatively be made as a part of the plate itself, however, preferably the gasket is used as the flow guiding element 82 also will help fixate the gasket to the edge. A corresponding flow guiding element 82' may be provided at the second edge 42.

### Reference numerals

10. plate heat exchanger
12. heat exchanger plates
12a/b. heat exchanger plate front side / heat exchanger plate rear side
14. plate package
16. frame plate
18. pressure plate
20. first plate interspaces
22. second plate interspaces
24. tightening bolts
26. cooling water inlet conduit
28. cooling water outlet conduit
30. fresh water outlet conduit
32. sea water inlet conduit
34. heating fluid inlet conduit
36. heating fluid outlet conduit
38a/b/c. first type gasket / second type gasket / gasket element
40. first longitudinal edge
42. second longitudinal edge
44. upper edge
46. lower edge
48. center axis
50a/b. evaporation section / heating section
52a/b. condensation section / cooling section
54a/b. separation section
56. first passage
58. second passage
60. lower vapor aperture
62/64/66. Upper vapor apertures
68. cooling fluid inlet
70. cooling fluid outlet
72. fresh water (condensate) outlet
74. heating fluid inlet
76. heating fluid outlet
78. feed inlet
80. non-evaporated feed outlet
82. flow guiding element
A (`) denotes a similar features in a different embodiment.

## Claims

1. A plate for a plate heat exchanger (10) for treatment of a liquid feed, the heat exchanger comprising a plate package (14) having a plurality of successively arranged heat exchanger plates (12), the heat exchanger plate (12) defining a first longitudinal edge (40), an opposite second longitudinal edge (42) extending parallel to the first longitudinal edge (40) and a centre axis (48) extending substantially centrally between and in parallel with the first longitudinal edge (40) and the second longitudinal edge (42), the centre axis (48) dividing the plate into a first part extending between the first longitudinal edge (40) and the centre axis (48), and a second part extending between the second longitudinal edge (42) and the centre axis (48), the plate package (14) defining first plate interspaces and second plate interspaces arranged in alternating order, each plate interspace being enclosed by a gasket (38) extending along the first and second longitudinal edges (40 42) of each plate, the heat exchanger plate (12) further defining:
an evaporation section (50a) for vaporizing the feed, a condensation section (52a) for condensing the feed, and a separation section (54a) for separating vaporized feed and non-vaporized feed, the separation section (54a) being located between the evaporation section (50a) and the condensation section (52a) in the longitudinal direction, whereby the heat exchanger plate (12) being corrugated in the separation section (54a) forming ridges and valleys, a ridge corresponds to a valley on the opposite side of the plate and in each plate interspace ridges fall into valleys and vice versa and whereby the condensation section (52a) and evaporation section (50a) forming a heat exchange area having a cross-corrugated pattern where opposing ridges of opposing plates contact at contact points,
a first passage (56) located between the evaporation section (50a) and the separation section (54a) in the first and second part of the plate for allowing the vaporized feed to flow from the evaporation section (50a) to the separation section (54a),
a second passage (58) located between the separation section (54a) and the condensation section (52a) in the first part of the plate for allowing the vaporized feed to flow from the separation section (54a) to the condensation section (52a),
**characterized in that**
a flow guiding element (82) is located between the separation section (54a) and the second passage (58) and extends from the first longitudinal edge (40) towards the centre axis (48) for reducing the flow area between the separation section (54a) and the second passage (58).

2. The plate according to claim 1, wherein the flow area between the separation section (54a) and the second passage (58) is reduced by 10%-30% compared to the flow area of the second passage (58).

3. The plate according to any of the preceding claims, wherein the flow guiding element (82) forms part of the gasket (38) along the first longitudinal edge (40).

4. The plate according to claim 3, wherein the flow guiding element (82) has a triangular shape.

5. The plate according to claim 4, wherein the flow guiding element (82) has a rounded shape towards the separation section (54a).

6. The plate according to any of the preceding claims, wherein every second plate interspace defines a cooling section for cooling the condensation section (52a) and/or heating section for heating the evaporation section (50a)

7. The plate according to any of the preceding claims, wherein a further flow guiding element (82) is present at the second edge extending towards the centre axis (48).

8. A plate heat exchanger (10) for treatment of a liquid feed, the heat exchanger comprising a plate package (14) having a plurality of successively arranged heat exchanger plates (12) according to any of the preceding claims and a gasket (38) element preventing access between the separation section (54a) and the condensation section (52a) in the second part of the plate.

9. The plate heat exchanger (10) according to claim 8, wherein the separation section (54a) and the flow guiding element (82) is provided in both the first and second plate interspaces.

10. The plate heat exchanger (10) according to claim 9, wherein the heat exchanging plates are provided with apertures at the first and second passages (58) for communication between the plate interspaces.

11. The plate heat exchanger (10) according to claim 10, wherein the heat exchanging plates are provided with ports for cooling medium and condensate and being arranged symmetrically about the centre axis (48) with respect to the ports at the second passage (58).

12. A gasket (38) for a plate heat exchanger (10) for treatment of a liquid feed, the heat exchanger comprising a plate package (14) having a plurality of successively arranged heat exchanger plates (12) according to any of the claims 1-11 with gaskets (38) in-between, the gasket (38) defining:
a first longitudinal edge (40), an opposite second longitudinal edge (42) extending parallel to the first longitudinal edge (40) and a centre axis (48) extending substantially centrally between and in parallel with the first longitudinal edge (40) and the second longitudinal edge (42), the centre axis (48) dividing the gasket (38) into a first part extending between the first longitudinal edge (40) and the centre axis (48), and a second part extending between the second longitudinal edge (42) and the centre axis (48),
an evaporation section (50a) for vaporizing the feed, a condensation section (52a) for condensing the feed, and a separation section (54a) for separating vaporized feed and non-vaporized feed, the separation section (54a) being located between the evaporation section (50a) and the condensation section (52a) in the longitudinal direction,
a first passage (56) located between the evaporation section (50a) and the separation section (54a) in the first and second part of the gasket (38) for allowing the vaporized feed to flow from the evaporation section (50a) to the separation section (54a),
a second passage (58) located between the separation section (54a) and the condensation section (52a) in the first part of the gasket (38) for allowing the vaporized feed to flow from the separation section (54a) to the condensation section (52a),
a gasket element (38c) preventing access between the separation section (54a) and the condensation section (52a) in the second part of the gasket (38), **characterized in that** the gasket further defines
a flow guiding element (82) located between the separation section (54a) and the second passage (58) and extending from the first longitudinal edge (40) towards the centre axis (48) for reducing the flow area between the separation section (54a) and the second passage (58).

13. A method of producing a plate heat exchanger (10) for treatment of a liquid feed such as sea water by providing a plurality of heat exchanging plates, each heat exchanger plate (12) defining:
a first longitudinal edge (40), an opposite second longitudinal edge (42) extending parallel to the first longitudinal edge (40) and a centre axis (48) extending substantially centrally between and in parallel with the first longitudinal edge (40) and the second longitudinal edge (42), the centre axis (48) dividing the plate into a first part extending between the first longitudinal edge (40) and the centre axis (48), and a second part extending between the second longitudinal edge (42) and the centre axis (48),
a evaporation section (50a) for vaporizing the feed, a condensation section (52a) for condensing the feed, and a separation section (54a) for separating vaporized feed and non-vaporized feed, the separation section (54a) being located between the evaporation section (50a) and the condensation section (52a) in the longitudinal direction, whereby the heat exchanger plate (12) being corrugated in the separation section (54a) forming ridges and valleys, a ridge corresponds to a valley on the opposite side of the plate and in each plate interspace ridges fall into valleys and vice versa and whereby the condensation section (52a) and evaporation section (50a) forming a heat exchange area having a cross-corrugated pattern where opposing ridges of opposing plates contact at contact points,
a first passage (56) located between the evaporation section (50a) and the separation section (54a) in the first and second part of the plate for allowing the vaporized feed to flow from the evaporation section (50a) to the separation section (54a),
a second passage (58) located between the separation section (54a) and the condensation section (52a) in the first part of the plate for allowing the vaporized feed to flow from the separation section (54a) to the condensation section (52a), and
a flow guiding element (82) located between the separation section (54a) and the second passage (58) and extending from the first longitudinal edge (40) towards the centre axis (48) for reducing the flow area between the separation section (54a) and the second passage (58),
the method comprising the steps of:
arranging the heat exchanging plates successively in a plate package (14) having a gasket (38) in-between each of the plates such that the plate package (14) defining first plate interspaces and second plate interspaces arranged in alternating order, whereby a gasket (38) element preventing access between the separation section (54a) and the condensation section (52a) in the second part of the plate and each plate interspace being enclosed by the gasket (38) extending along the first and second edges of each plate.

## Patentansprüche

1. Platte für einen Plattenwärmetauscher (10) zur Behandlung einer flüssigen Einspeisung, wobei der Wärmetauscher ein Plattenpaket (14) umfasst, das eine Vielzahl von aufeinanderfolgend angeordneten Wärmetauscherplatten (12) aufweist, wobei die Wärmetauscherplatte (12) eine erste Längskante (40), eine gegenüberliegende zweite Längskante (42), die sich parallel zu der ersten Längskante (40) erstreckt, und eine Mittelachse (48), die sich im Wesentlichen mittig zwischen und parallel zu der ersten Längskante (40) und der zweiten Längskante (42) erstreckt, definiert, wobei die Mittelachse (48) die Platte in einen ersten Teil, der sich zwischen der ersten Längskante (40) und der Mittelachse (48) erstreckt, und einen zweiten Teil, der sich zwischen der zweiten Längskante (42) und der Mittelachse (48) erstreckt, teilt, wobei das Plattenpaket (14) erste Plattenzwischenräume und zweite Plattenzwischenräume definiert, die in abwechselnder Reihenfolge angeordnet sind, wobei jeder Plattenzwischenraum durch eine Dichtung (38) umschlossen wird, die sich entlang der ersten und der zweiten Längskante (40, 42) jeder Platte erstreckt, wobei die Wärmetauscherplatte (12) ferner Folgendes definiert:
eine Verdampfungssektion (50a) zum Verdampfen der Einspeisung, eine Kondensationssektion (52a) zum Kondensieren der Einspeisung und eine Abscheidungssektion (54a) zum Abscheiden von verdampfter Einspeisung und nichtverdampfter Einspeisung, wobei die Abscheidungssektion (54a) zwischen der Verdampfungssektion (50a) und der Kondensationssektion (52a) in der Längsrichtung befindlich ist, wodurch, da die Wärmetauscherplatte (12) in der Abscheidungssektion (54a) gewellt ist, wobei sie Stege und Furchen bildet, ein Steg einer Furche auf der entgegengesetzten Seite der Platte entspricht und in jedem Plattenzwischenraum Stege in Furchen fallen und umgekehrt, und wodurch die Kondensationssektion (52a) und die Verdampfungssektion (50a) einen Wärmetauschbereich bilden, der ein quergewelltes Muster aufweist, wo gegenüberliegende Stege von gegenüberliegenden Platten einander an Berührungspunkten berühren,
einen ersten Durchgang (56), der zwischen der Verdampfungssektion (50a) und der Abscheidungssektion (54a) in dem ersten und dem zweiten Teil der Platte befindlich ist, zum Ermöglichen, dass die verdampfte Einspeisung von der Verdampfungssektion (50a) zu der Abscheidungssektion (54a) strömt,
einen zweiten Durchgang (58), der zwischen der Abscheidungssektion (54a) und der Kondensationssektion (52a) in dem ersten Teil der Platte befindlich ist, zum Ermöglichen, dass die verdampfte Einspeisung von der Abscheidungssektion (54a) zu der Kondensationssektion (52a) strömt,
**dadurch gekennzeichnet, dass**
ein Strömungsleitelement (82) zwischen der Abscheidungssektion (54a) und dem zweiten Durchgang (58) befindlich ist und sich von der ersten Längskante (40) zu der Mittelachse (48) hin erstreckt, zum Verringern des Durchflussquerschnitts zwischen der Abscheidungssektion (54a) und dem zweiten Durchgang (58).

2. Platte nach Anspruch 1, wobei der Durchflussquerschnitt zwischen der Abscheidungssektion (54a) und dem zweiten Durchgang (58), verglichen mit dem Durchflussquerschnitt des zweiten Durchgangs (58), um 10 % bis 30 % verringert ist.

3. Platte nach einem der vorhergehenden Ansprüche, wobei das Strömungsleitelement (82) einen Teil der Dichtung (38) entlang der ersten Längskante (40) ist.

4. Platte nach Anspruch 3, wobei das Strömungsleitelement (82) eine dreieckige Form aufweist.

5. Platte nach Anspruch 4, wobei das Strömungsleitelement (82) zu der Abscheidungssektion (54a) hin eine gerundete Form aufweist.

6. Platte nach einem der vorhergehenden Ansprüche, wobei jeder zweite Plattenzwischenraum eine Abkühlungssektion zum Abkühlen der Kondensationssektion (52a) und/oder eine Erwärmungssektion zum Erwärmen der Verdampfungssektion (50a) definiert.

7. Platte nach einem der vorhergehenden Ansprüche, wobei ein weiteres Strömungsleitelement (82) an der zweiten Kante vorhanden ist, das sich zu der Mittelachse (48) hin erstreckt.

8. Plattenwärmetauscher (10) zur Behandlung einer flüssigen Einspeisung, wobei der Wärmetauscher ein Plattenpaket (14) umfasst, das eine Vielzahl von aufeinanderfolgend angeordneten Wärmetauscherplatten (12) nach einem der vorhergehenden Ansprüche und ein Element einer Dichtung (38), das einen Zugang zwischen der Abscheidungssektion (54a) und der Kondensationssektion (52a) in dem zweiten Teil der Platte verhindert, aufweist.

9. Plattenwärmetauscher (10) nach Anspruch 8, wobei die Abscheidungssektion (54a) und das Strömungsleitelement (82) in sowohl den ersten als auch den zweiten Plattenzwischenräumen bereitgestellt werden.

10. Plattenwärmetauscher (10) nach Anspruch 9, wobei die Wärmetauschplatten mit Öffnungen an den ersten und den zweiten Durchgängen (58) für eine Verbindung zwischen den Plattenzwischenräumen versehen sind.

11. Plattenwärmetauscher (10) nach Anspruch 10, wobei die Wärmetauschplatten mit Anschlüssen für Kühlmedium und Kondensat versehen sind und in Bezug auf die Anschlüsse an dem zweiten Durchgang (58) symmetrisch um die Mittelachse (48) angeordnet sind.

12. Dichtung (38) für einen Plattenwärmetauscher (10) zur Behandlung einer flüssigen Einspeisung, wobei der Wärmetauscher ein Plattenpaket (14) umfasst, das eine Vielzahl von aufeinanderfolgend angeordneten Wärmetauscherplatten (12) nach einem der Ansprüche 1 bis 11 mit Dichtungen (38) dazwischen aufweist, wobei die Dichtung (38) Folgendes definiert:
eine erste Längskante (40), eine gegenüberliegende zweite Längskante (42), die sich parallel zu der ersten Längskante (40) erstreckt, und eine Mittelachse (48), die sich im Wesentlichen mittig zwischen und parallel zu der ersten Längskante (40) und der zweiten Längskante (42) erstreckt, wobei die Mittelachse (48) die Dichtung (38) in einen ersten Teil, der sich zwischen der ersten Längskante (40) und der Mittelachse (48) erstreckt, und einen zweiten Teil, der sich zwischen der zweiten Längskante (42) und der Mittelachse (48) erstreckt, teilt,
eine Verdampfungssektion (50a) zum Verdampfen der Einspeisung, eine Kondensationssektion (52a) zum Kondensieren der Einspeisung und eine Abscheidungssektion (54a) zum Abscheiden von verdampfter Einspeisung und nichtverdampfter Einspeisung, wobei die Abscheidungssektion (54a) zwischen der Verdampfungssektion (50a) und der Kondensationssektion (52a) in der Längsrichtung befindlich ist,
einen ersten Durchgang (56), der zwischen der Verdampfungssektion (50a) und der Abscheidungssektion (54a) in dem ersten und dem zweiten Teil der Dichtung (38) befindlich ist, zum Ermöglichen, dass die verdampfte Einspeisung von der Verdampfungssektion (50a) zu der Abscheidungssektion (54a) strömt,
einen zweiten Durchgang (58), der zwischen der Abscheidungssektion (54a) und der Kondensationssektion (52a) in dem ersten Teil der Dichtung (38) befindlich ist, zum Ermöglichen, dass die verdampfte Einspeisung von der Abscheidungssektion (54a) zu der Kondensationssektion (52a) strömt,
ein Dichtungselement (38a), das einen Zugang zwischen der Abscheidungssektion (54a) und der Kondensationssektion (52a) in dem zweiten Teil der Dichtung (38) verhindert, **dadurch gekennzeichnet, dass** die Dichtung ferner Folgendes definiert:
ein Strömungsleitelement (82), das zwischen der Abscheidungssektion (54a) und dem zweiten Durchgang (58) befindlich ist und sich von der ersten Längskante (40) zu der Mittelachse (48) hin erstreckt, zum Verringern des Durchflussquerschnitts zwischen der Abscheidungssektion (54a) und dem zweiten Durchgang (58).

13. Verfahren zum Herstellen eines Plattenwärmetauschers (10) zur Behandlung einer flüssigen Einspeisung, wie beispielsweise Meerwasser, durch Bereitstellen einer Vielzahl von Wärmetauschplatten, wobei jede Wärmetauscherplatte (12) Folgendes definiert:
eine erste Längskante (40), eine gegenüberliegende zweite Längskante (42), die sich parallel zu der ersten Längskante (40) erstreckt, und eine Mittelachse (48), die sich im Wesentlichen mittig zwischen und parallel zu der ersten Längskante (40) und der zweiten Längskante (42) erstreckt, wobei die Mittelachse (48) die Platte in einen ersten Teil, der sich zwischen der ersten Längskante (40) und der Mittelachse (48) erstreckt, und einen zweiten Teil, der sich zwischen der zweiten Längskante (42) und der Mittelachse (48) erstreckt, teilt,
eine Verdampfungssektion (50a) zum Verdampfen der Einspeisung, eine Kondensationssektion (52a) zum Kondensieren der Einspeisung und eine Abscheidungssektion (54a) zum Abscheiden von verdampfter Einspeisung und nichtverdampfter Einspeisung, wobei die Abscheidungssektion (54a) zwischen der Verdampfungssektion (50a) und der Kondensationssektion (52a) in der Längsrichtung befindlich ist, wodurch, da die Wärmetauscherplatte (12) in der Abscheidungssektion (54a) gewellt ist, wobei sie Stege und Furchen bildet, ein Steg einer Furche auf der entgegengesetzten Seite der Platte entspricht und, in jedem Plattenzwischenraum, Stege in Furchen fallen und umgekehrt, und wodurch die Kondensationssektion (52a) und die Verdampfungssektion (50a) einen Wärmetauschbereich bilden, der ein quergewelltes Muster aufweist, wo gegenüberliegende Stege von gegenüberliegenden Platten einander an Berührungspunkten berühren,
einen ersten Durchgang (56), der zwischen der Verdampfungssektion (50a) und der Abscheidungssektion (54a) in dem ersten und dem zweiten Teil der Platte befindlich ist, zum Ermöglichen, dass die verdampfte Einspeisung von der Verdampfungssektion (50a) zu der Abscheidungssektion (54a) strömt,
einen zweiten Durchgang (58), der zwischen der Abscheidungssektion (54a) und der Kondensationssektion (52a) in dem ersten Teil der Platte befindlich ist, zum Ermöglichen, dass die verdampfte Einspeisung von der Abscheidungssektion (54a) zu der Kondensationssektion (52a) strömt, und
ein Strömungsleitelement (82), das zwischen der Abscheidungssektion (54a) und dem zweiten Durchgang (58) befindlich ist und sich von der ersten Längskante (40) zu der Mittelachse (48) hin erstreckt, zum Verringern des Durchflussquerschnitts zwischen der Abscheidungssektion (54a) und dem zweiten Durchgang (58),
wobei das Verfahren die folgenden Schritte umfasst:
Anordnen der Wärmetauschplatten aufeinanderfolgend in einem Plattenpaket (14), das eine Dichtung (38) zwischen jeder der Platten aufweist, so dass das Plattenpaket (14) erste Plattenzwischenräume und zweite Plattenzwischenräume definiert, die in abwechselnder Reihenfolge angeordnet sind, wobei ein Element einer Dichtung (38) einen Zugang zwischen der Abscheidungssektion (54a) und der Kondensationssektion (52a) in dem zweiten Teil der Platte verhindert und jeder Plattenzwischenraum durch die Dichtung (38) umschlossen wird, die sich entlang der ersten und der zweiten Kante jeder Platte erstreckt.

## Revendications

1. Plaque pour un échangeur de chaleur à plaques (10) pour le traitement d'une alimentation liquide, l'échangeur de chaleur comprenant un ensemble de plaques (14) doté d'une pluralité de plaques d'échangeur de chaleur disposées en succession (12), la plaque d'échangeur de chaleur (12) définissant un premier bord longitudinal (40), un deuxième bord longitudinal opposé (42) s'étendant parallèlement au premier bord longitudinal (40) et un axe central (48) s'étendant sensiblement au niveau central entre le premier bord longitudinal (40) et le deuxième bord longitudinal (42) et parallèlement à ceux-ci, l'axe central (48) divisant la plaque en une première partie s'étendant entre le premier bord longitudinal (40) et l'axe central (48), et une deuxième partie s'étendant entre le deuxième bord longitudinal (42) et le deuxième axe central (48), l'ensemble de plaques (14) définissant de premiers intervalles de plaques et de deuxièmes intervalles de plaques agencés en alternance, chaque intervalle de plaque étant entouré par un joint (38) s'étendant le long du premier et du deuxième bord longitudinal (40, 42) de chaque plaque, la plaque d'échangeur de chaleur (12) définissant en outre :
une section d'évaporation (50a) permettant de vaporiser l'alimentation, une section de condensation (52a) permettant de condenser l'alimentation, et une section de séparation (54a) permettant de séparer l'alimentation vaporisée et l'alimentation non-vaporisée, la section de séparation (54a) étant située entre la section d'évaporation (50a) et la section de condensation (52a) dans la direction longitudinale, moyennant quoi, la plaque d'échangeur de chaleur (12) étant ondulée dans la section de séparation (54a), formant des crêtes et des creux, une crête correspond à un creux sur le côté opposé de la plaque et, dans chaque intervalle de plaque, des crêtes tombent dans des creux et inversement, et moyennant quoi la section de condensation (52a) et la section d'évaporation (50a) forment une zone d'échange de chaleur présentant un motif ondulé transversal où des crêtes opposées de plaques opposées entrent en contact au niveau de points de contact,
un premier passage (56) situé entre la section d'évaporation (50a) et la section de séparation (54a) dans la première et la deuxième parties de la plaque pour permettre à l'alimentation vaporisée de s'écouler depuis la section d'évaporation (50a) vers la section de séparation (54a),
un deuxième passage (58) situé entre la section de séparation (54a) et la section de condensation (52a) dans la première partie de la plaque pour permettre à l'alimentation vaporisée de s'écouler depuis la section de séparation (54a) vers la section de condensation (52a),
**caractérisée en ce que**
un élément de guidage de flux (82) est situé entre la section de séparation (54a) et le deuxième passage (58) et s'étend depuis le premier bord longitudinal (40) vers l'axe central (48) pour réduire la zone d'écoulement entre la section de séparation (54a) et le deuxième passage (58).

2. Plaque selon la revendication 1, dans laquelle la zone d'écoulement entre la section de séparation (54a) et le deuxième passage (58) est réduite de 10 % à 30 % par rapport à la zone d'écoulement du deuxième passage (58).

3. Plaque selon l'une quelconque des revendications précédentes, dans laquelle l'élément de guidage de flux (82) fait partie du joint (38) le long du premier bord longitudinal (40).

4. Plaque selon la revendication 3, dans laquelle l'élément de guidage de flux (82) présente une forme triangulaire.

5. Plaque selon la revendication 4, dans laquelle l'élément de guidage de flux (82) présente une forme arrondie vers la section de séparation (54a).

6. Plaque selon l'une quelconque des revendications précédentes, dans laquelle chaque deuxième intervalle de plaque définit une section de refroidissement permettant de refroidir la section de condensation (52a) et/ou la section de chauffage permettant de chauffer la section d'évaporation (50a).

7. Plaque selon l'une quelconque des revendications précédentes, dans laquelle un élément de guidage de flux (82) supplémentaire est présent au niveau du deuxième bord s'étendant vers l'axe central (48).

8. Échangeur de chaleur à plaques (10) pour le traitement d'une alimentation liquide, l'échangeur de chaleur comprenant un ensemble de plaques (14) doté d'une pluralité de plaques d'échangeur de chaleur disposées en succession (12) selon l'une quelconque des revendications précédentes, et d'un élément de joint (38) empêchant l'accès entre la section de séparation (54a) et la section de condensation (52a) dans la deuxième partie de la plaque.

9. Échangeur de chaleur à plaques (10) selon la revendication 8, dans lequel la section de séparation (54a) et l'élément de guidage de flux (82) sont prévus dans le premier et le deuxième intervalle de plaque.

10. Échangeur de chaleur à plaques (10) selon la revendication 9, dans lequel les plaques d'échange de chaleur sont dotées d'ouvertures au niveau des premier et deuxième passages (58) pour la communication entre les intervalles de plaque.

11. Échangeur de chaleur à plaques (10) selon la revendication 10, dans lequel les plaques d'échange de chaleur sont dotées d'orifices pour l'agent réfrigérant et le condensat et disposés de manière symétrique autour de l'axe central (48) relativement aux orifices au niveau du deuxième passage (58).

12. Joint (38) pour un échangeur de chaleur à plaques (10) pour le traitement d'une alimentation liquide, l'échangeur de chaleur comprenant un ensemble de plaques (14) doté d'une pluralité de plaques d'échangeur de chaleur disposées de manière successive (12) selon l'une quelconque des revendications 1 à 11 avec des joints (38) entre eux, le joint (38) définissant :
un premier bord longitudinal (40), un deuxième bord longitudinal opposé (42) s'étendant parallèlement au premier bord longitudinal (40) et un axe central (48) s'étendant sensiblement de manière centrale entre le premier bord longitudinal (40) et le deuxième bord longitudinal (42) et parallèlement à ceux-ci, l'axe central (48) divisant le joint (38) en une première partie s'étendant entre le premier bord longitudinal (40) et l'axe central (48), et une deuxième partie s'étendant entre le deuxième bord longitudinal (42) et l'axe central (48),
une section d'évaporation (50a) permettant de vaporiser l'alimentation, une section de condensation (52a) permettant de condenser l'alimentation, et une section de séparation (54a) permettant de séparer l'alimentation vaporisée et l'alimentation non-vaporisée, la section de séparation (54a) étant située entre la section d'évaporation (50a) et la section de condensation (52a) dans la direction longitudinale,
un premier passage (56) situé entre la section d'évaporation (50a) et la section de séparation (54a) dans la première et la deuxième parties du joint (38) pour permettre à l'alimentation vaporisée de s'écouler de la section d'évaporation (50a) à la section de séparation (54a),
un deuxième passage (58) situé entre la section de séparation (54a) et la section de condensation (52a) dans la première partie du joint (38) pour permettre à l'alimentation vaporisée de s'écouler de la section de séparation (54a) à la section de condensation (52a),
un élément de joint (38c), empêchant l'accès entre la section de séparation (54a) et la section de condensation (52a) dans la deuxième partie du joint (38), **caractérisé en ce que** le joint définit en outre :
un élément de guidage de flux (82) situé entre la section de séparation (54a) et le deuxième passage (58) et s'étendant depuis le premier bord longitudinal (40) vers l'axe central (48) pour réduire la zone d'écoulement entre la section de séparation (54a) et le deuxième passage (58).

13. Procédé de production d'un échangeur de chaleur à plaques (10) pour le traitement d'une alimentation liquide, comme de l'eau de mer, en fournissant une pluralité de plaques d'échangeur de chaleur, chaque plaque d'échangeur de chaleur (12) définissant :
un premier bord longitudinal (40), un deuxième bord longitudinal opposé (42) s'étendant parallèlement au premier bord longitudinal (40) et un axe central (48) s'étendant sensiblement au niveau central entre le premier bord longitudinal (40) et le deuxième bord longitudinal (42) et parallèlement à ceux-ci, l'axe central (48) divisant la plaque en une première partie s'étendant entre le premier bord longitudinal (40) et l'axe central (48), et une deuxième partie s'étendant entre le deuxième bord longitudinal (42) et l'axe central (48),
une section d'évaporation (50a) permettant de vaporiser l'alimentation, une section de condensation (52a) permettant de condenser l'alimentation, et une section de séparation (54a) permettant de séparer l'alimentation vaporisée et l'alimentation non-vaporisée, la section de séparation (54a) étant située entre la section d'évaporation (50a) et la section de condensation (52a) dans la direction longitudinale, moyennant quoi, la plaque d'échangeur de chaleur (12) étant ondulée dans la section de séparation (54a), formant des crêtes et des creux, une crête correspond à un creux sur le côté opposé de la plaque et, dans chaque intervalle de plaque, des crêtes tombent dans des creux et inversement, et moyennant quoi la section de condensation (52a) et la section d'évaporation (50a) forment une zone d'échange de chaleur présentant un motif ondulé transversal où des crêtes opposées de plaques opposées entrent en contact au niveau de points de contact,
un premier passage (56) situé entre la section d'évaporation (50a) et la section de séparation (54a) dans la première et la deuxième partie de la plaque pour permettre à l'alimentation vaporisée de s'écouler depuis la section d'évaporation (50a) vers la section de séparation (54a),
un deuxième passage (58) situé entre la section de séparation (54a) et la section de condensation (52a) dans la première partie de la plaque pour permettre à l'alimentation vaporisée de s'écouler depuis la section de séparation (54a) vers la section de condensation (52a), et
un élément de guidage de flux (82) situé entre la section de séparation (54a) et le deuxième passage (58) et s'étendant depuis le premier bord longitudinal (40) vers l'axe central (48) pour réduire la zone d'écoulement entre la section de séparation (54a) et le deuxième passage (58),
le procédé comprenant les étapes consistant à :
agencer les plaques d'échange de chaleur successivement dans un ensemble de plaques (14) doté d'un joint (38) entre chacune des plaques de sorte que l'ensemble de plaques (14) définit de premiers intervalles de plaque et de deuxièmes intervalles de plaques agencés en alternance, dans lequel un élément de joint (38) empêche l'accès entre la section de séparation (54a) et la section de condensation (52a) dans la deuxième partie de la plaque et chaque intervalle de place est entouré par le joint (38) s'étendant le long du premier et du deuxième bord de chaque plaque.
